# EUROPEAN PATENT APPLICATION

(11) **EP 1 683 440 A1**
(43) Date of publication of application: **26.07.2006**
(21) Application number: 06075091.6
(22) Date of filing: 16.01.2006
(51) Int. Cl.: A47B 91/14, A01M 29/00, A01K 31/12

(54) **Construction to prevent crawling poultry parasites from approaching their prey**

(30) Priority: 20.01.2005 NL 1028073
(71) Applicant: Van der Weerd, Jan Zwier, 8196 KK Welsum (NL)
(72) Inventor: Van der Weerd, Jan Zwier, 8196 KK Welsum (NL)

(57) **Abstract**

A construction to prevent crawling parasites, for example red poultry mite, from approaching their prey in a sleeping facility, consisting of a construction that forms a barrier between the outside world and the sleeping facility, in which this construction, to prevent contamination, is provided with a solid lid (4) separate from the dish (1) of the trap, and in which this lid is provided with an opening (5) for cleaning and filling. This opening is in turn provided with a cover (6) that can be opened and closed easily. The dish of the trap can also be provided with a valve (8) so that the trap can be cleaned and filled automatically.

## Description

The invention relates to a construction for preventing crawling poultry parasites such as chicken mite (Dermanyssus gallinae) from approaching their prey animals, for example chickens, while these are in a sleeping facility.

These parasites remain hidden during the day when the chickens are active. The chicken itself is the greatest enemy of this parasite. When the prey is not moving, they crawl - they are unable to fly or jump - towards the animal, they attach themselves to the animal and suck its blood. They then release themselves from the animal and crawl back to a place of hiding. As a result of the continuous loss of blood - a chicken can be visited by as many as 17,000 blood suckers per night and lose up to 2.5% of its blood - the condition and the productivity of the

chickens and their resistance to disease are reduced. The modem poultry housing methods that will shortly become compulsory are more favourable for the mite, which means the problems have increased in recent years.

Chemicals can be used to control the mite, but the number of substances that may be used is becoming increasingly limited and the mite are growing more and more resistant. Another method is to heat the stall to more than 45 degrees for 2 days when it is empty, usually once every 14 months. This method is only moderately effective and is expensive.

Another method for controlling the poultry mite is by using a trap between the outside world and the birds' sleeping facility. Filling the trap with water, biodiesel or a pesticide prevents the mite from reaching their prey. An example of a solution of this type is known from Patent 015187.

The disadvantage of this construction is that the existing traps are easily contaminated, so that bridges develop with the outside world and undo the effect. Another disadvantage of the patent mentioned is that it requires an expensive construction.

The purpose of the invention is to provide a trap of this type that is simple, relatively cheap to produce, not easily contaminated, easy to clean and fill, and can be used with most existing sleeping facilities.

The construction according to the invention consists of a trap of the known type comprising a dish that can be filled with liquid or pesticide and a vertical support attached to the base of the dish so that the path for crawling parasites between the sleeping facility and the outside world can only run via this liquid or pesticide. To prevent contamination by manure, litter, feed residues, feathers and other contaminants falling into the dish, so that a bridge is formed again between the outside world and the sleeping facility, the dish is provided with a solid lid with rounded edges and a diameter larger than the diameter of the dish, which covers the upper side of the dish, leaving a space between the upper side of the dish and the underside of the lid that is small enough to provide optimum protection for the dish against intruding waste matter without forming a bridge between the support and the outside world. The lid has rounded edges to improve the protection against falling matter even more, as the horizontal gap is eliminated, and this also prevents manure or dirt from being deposited on the lid.

To make it possible to clean the dish from time to time, this lid is provided with an opening that is as small as possible, but large enough to clean and fill the dish with a nozzle, for example on a knapsack sprayer. This opening is provided with a cover. The cover is fitted with a hinged or pivoted construction such that it can be easily opened and closed with the same spray nozzle. The vertical support attached to the base of the dish is fitted with a connection piece making it possible to use the construction in combination with most commonly used sleeping facilities.

In a different version of the construction, the dish can be fitted with a valve as high as possible in the side, to which a system of air pressure or fluid pipelines can be connected, so that the dishes can be automatically cleaned and filled at set times.

The advantage of this construction compared with the existing one is that the construction becomes contaminated much less easily. The small opening between lid and dish means no large matter can penetrate. It will take a long time for the fine matter dispersed in the air by the scratching of the chickens to create sufficient contamination for it to become possible that a bridge to the outside world is formed. The opening that can be closed off with the cover makes it possible to clean and refill the dish quickly without contamination occurring. The variant with the fixed connection valve also makes it possible for the maintenance process to be carried out automatically in large premises with very large numbers of chickens.

The special connection piece makes it possible to use the construction in existing stalls and in combination with commonly used sleeping facilities, such as an A-shaped roosting rack.

The invention will be described in detail below on the basis of a model version of the construction in accordance with the invention, illustrated diagrammatically.

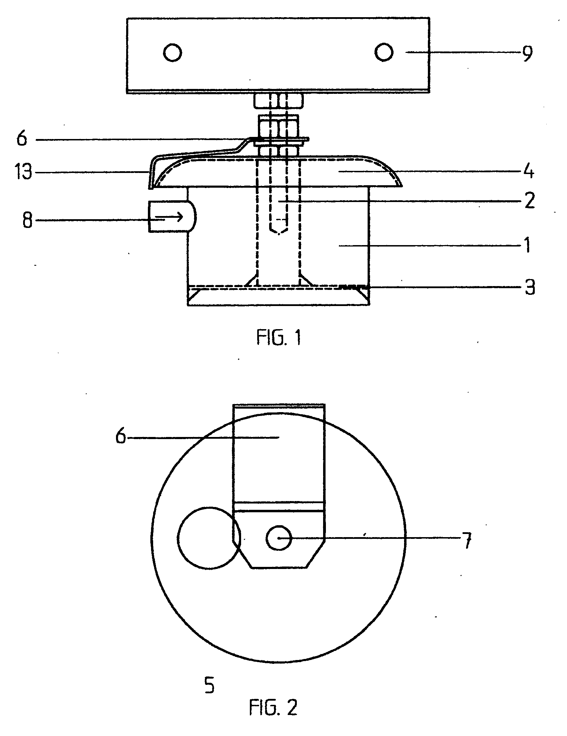

Fig. 1 shows the construction in cross-section.
Fig. 2 shows the construction viewed from above.

On the base of the illustrated dish (1), the vertical support (2) is attached to the base (3) of this dish (1). This support (2) is fitted with a solid, slightly bulbous lid (4), which remains at a distance of a few millimetres from the upper edge (11) of the dish (1).

The lid (4) is provided with an opening (5) for cleaning and filling the construction; this opening is fitted with a movable cover (6) with which the opening can be sealed off. The cover (6) has a pivot point (7) and the upright edge (13) by means of which the cover (6) can be opened and closed with a spray nozzle to be used for cleaning and filling.

The dish (1) is fitted under the upper edge with the valve (8) that can be connected to a water or air pipeline.

The support (2) is fitted with a steel strip (9) with screw holes enabling the construction to be fastened to, for example, the leg of an A-shaped roosting rack.

## Claims

1. A construction to prevent crawling parasites, for example red poultry mite, from approaching their prey in a sleeping facility, for example on roosts, consisting of a construction that separates the outside world and the sleeping facility, with the construction comprising a dish (1) that can be filled with a liquid or a pesticide and a vertical support (2) attached to the base (3) of this dish **characterised in that** the construction is fitted with a protective solid lid (4) to prevent the dish (1) from becoming contaminated by falling waste, with the lid being attached to the support (2), above but separate from the dish (1) and at such a distance from the dish that as little contamination as possible can penetrate the opening, but no bridge can be formed with the outside world, and with the lid (4) having a diameter larger than that of the dish and having a rounded edge that protrudes to some extent over the upper side of the dish (1).

2. A construction as claimed in claim 1 **characterised in that** the lid mentioned above (4) is provided with an opening (5) so that the dish can be cleaned and refilled.

3. A construction as claimed in claim 1 and 2 **characterised in that** the opening mentioned above (5) in the lid (4) is fitted with a hinged or pivoted cover (6) that prevents the dish (1) becoming contaminated by falling waste and with the cover (6) and the pivot point or hinge (7) being constructed in such a way that the cover can easily be opened or closed with the cleaning or filling implement.

4. A construction as claimed in claim 1 **characterised in that** the dish (1) is fitted with a valve (8) that can be connected to an air or fluid pipeline system so that the dish can be cleaned or refilled automatically.

5. A construction as claimed in claim 1 **characterised in that** the support (2) of this construction is provided with a special fastener (9) that makes it possible to use this construction in existing premises with existing sleeping facilities.
